# EUROPEAN PATENT APPLICATION

(11) **EP 2 245 972 A2**
(43) Date of publication of application: **03.11.2010**
(21) Application number: 09009225.5
(22) Date of filing: 15.07.2009
(51) Int. Cl.: A47J 43/25

(54) **Enhanced hand operated grater**

(30) Priority: 27.04.2009 US 386985
(71) Applicant: Grace Manufacturing Inc., Russellville, Arkansas 72801 (US)
(72) Inventor: Grace, Christopher R., Russellville, AR 72802 (US); Grace, Richard L., Dover, AR 72837-8496 (US); McGuyer, Carter, Muscle Shoals, AL 35663 (US)
(74) Representative: Galloway, Peter David

(57) **Abstract**

A hand held rotary grater for grating foodstuffs and the like in which a housing having a handle encircles a grater barrel having a crank for rotating the grater barrel within the housing. The grater includes a lever with a cap at one end which is in registry with a hopper in the housing for holding the foodstuff against the grater barrel. The lever is rotatable about a pin mounted in the housing so as to create a mechanical advantage for the user in order that pressure on the lever is increased at the cap for applying pressure to the foodstuff against the grater barrel. Furthermore, the abrading elements operable in one direction are of a different size and configuration than those in the opposite direction to thereby create different size particulate during the abrading process.

## Description

The present invention relates generally to graters and, more particularly, to enhancements to hand operated kitchen type rotary graters.

### BACKGROUND OF THE INVENTION

### Field of the Invention

Graters of the type for which the present invention constitutes a distinct enhancement have been in use for many years, both in commercial establishments and in the kitchen at home. More commonly referred to as rotary graters, such devices are used primarily for the application of cheeses and spices in particulate form from a solid block or piece of the cheese or spice to be applied to a foodstuff such as, e.g., a salad or casserole.

The rotary grater comprises a rotary drum formed with ano abrading surface held in a housing of some sort, which is hand held. The block of cheese or spice is placed against the abrading surface of the barrel while the barrel is rotated, resulting in the abrading of the spice or cheese, and the resultant particulate is gravitationally fed on to the dish being served.

A feature of a rotary grater is a device for positioning and holding the block of material to be abraded against the abrading surface of the abrading drum as the drum is rotated.

### Overview of the Prior Art

It is typical of such rotary graters that the device for applying pressure to the block of foodstuff is hingeably mounted at the rear of the handle so that the user, when he/she grips the handle, the device simultaneously applies pressure on the block of foodstuff to be abraded, holding it against the abrading drum.

Such a rotary grater is depicted in Takayama et al. patent 7,137,581. Similarly, see Prommel et al. patent 6,766,972, where, as in Takayama, the upper portion of the handle is pivoted at the remote end of the handle itself. Other similar examples exist, the recitation of which would not materially enhance the utility of intelligence relative to the subject of the present invention.

### SUMMARY OF THE INVENTION

As previously stated, rotary graters are prominently found in restaurant environments where cheeses and other spices are dispensed by such devices, often at the patron's table. In many such environments a server may be called upon to use the rotary grater several times every hour. In other instances, the rotary grater may be called upon to dispense difficult foodstuffs in the nature of cheeses and spices which, for whatever reason, require more than the usual hand pressure to effectively dispense the foodstuff.

It is an objective of the present invention to facilitate the dispensing of even the more difficult foodstuffs with greater ease than previously possible. It is an objective related to the foregoing, to accomplish the tasks attendant the repeated use of a rotary grater without the fatigue that one would otherwise expect under such circumstances.

It is a more specific objective of the present invention to provide a rotary grater which permits the user to exert maximum force on a foodstuff to be grated, without increasing the manual pressure applied. Stated another way, this objective is to provide a rotary grater which effectively multiples the pressure which is manually applied, at the point of contact with the foodstuff, to facilitate abrading of the foodstuff.

Having now established the environment in which the present invention has particular, although perhaps not exclusive, utility, a detailed description of a preferred embodiment will hereinafter be presented in conjunction with the accompanying drawings, wherein:

### BRIEF DESCRIPTION OF THE DRAWINGS

FIG. 1 is a pictorial view of a rotary grater constructed in accordance with the present invention;

FIG. 2 is a sectional view of the rotary grater of FIG. 1, taken along lines 2-2 of FIG. 1;

FIG. 3 is a view similar to that of FIG. 1, with the exception that the movable portion of the handle has been rotated about its axis of rotation to a full open position;

FIG. 4 is a sectional view of the rotary grater of FIG. 3, taken along lines 4-4;

FIG. 5 is an exploded view of the rotary grater constructed in accordance with the present invention; and,

FIG. 6, is a layout of the plate which comprises the operative portion of the rotary grater barrel.

### DETAILED DESCRIPTION OF A PREFERRED EMBODIMENT

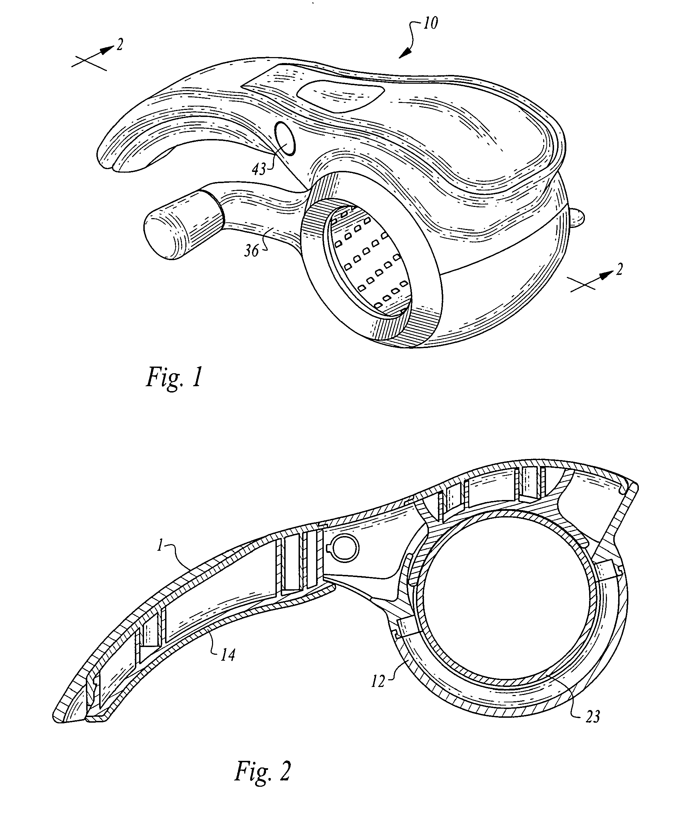

With reference now to the drawings, and initially to FIG. 1, a rotary grater constructed in accordance with the present invention is depicted at 10. Structurally, the grater 10 comprises a housing 12 which includes a relatively rigid handle 14 and an open chamber 16. The handle and chamber are, preferably, integrally formed, but may be individual pieces connected in a fixed relation.

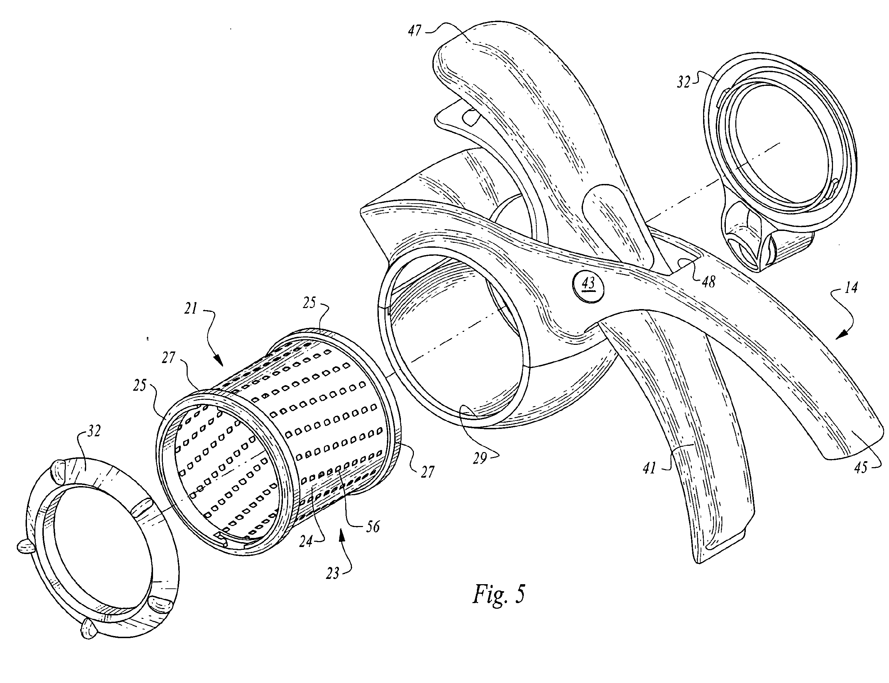

The open chamber 16 is uniquely structured to house and support a grater barrel 21, best seen in FIG. 5, for rotation within the chamber 16. The grater barrel 21 is open ended and comprised of an abrader cylinder 23 formed with an array of abrading elements in the form of teeth 25, aligned in a suitable pattern, such as the parallel rows as shown, although other patterns may provide suitable performance.

The abrader cylinder 23 includes a plate 24, itself preferably being formed by photo chemical etching on a thin metal sheet, as taught in Sturtevant et al. patent 5,100,506, or in such other means as meets the specifications of the manufacturer. The sheet is then formed into a cylinder such as by securing it in end caps 25. Each end cap 25 is formed, or otherwise provided, with a circumferential bearing race 27. When the barrel 21 is assembled in the open chamber 16, the circumferential races 27 are aligned with, and rotatably ride on, internally disposed companion races 29 formed, or otherwise provided, in the open chamber 16. Retainer 32 and crank ring 34 engage the end caps 25 in such a manner that the barrel 21 can be positioned in the housing 12, holding the barrel in the appropriate position in the open chamber. The preferred design will allow for the retainer 32, or crank ring 34, to be mounted on either side of the barrel to enable a right-handed or left-handed user to manually rotate the crank arm 36.

The abrading cylinder, or barrel, may contain abrading elements which are oriented in a manner to allow them to engage the foodstuffs when the barrel is rotated in a single direction. However, due to the design flexibility of the end cap 25, retainer 32 and crank ring 34, which allows them to be assembled in multiple orientations, the abrading cylinder, or barrel, may be comprised of a variety of abrading elements operable in single or multiple directions; for example, with cutting edges that face in opposing directions. Either a right-handed or left-handed user could assemble the barrel 21, retainer 32 and crank ring 34 such that one set of abrading elements engage and abrade the foodstuffs, thereby creating particulate, while the oppositely facing abrading elements are rotating in a direction that renders them useless. The abrading elements could be varied in the size and configuration of the tooth and of the hole adjacent to the abrading element, the size of the abrading elements, the distance the abrading elements are elevated above the face of the drum, or any combination thereof, such that using a single barrel, the user may achieve different particulate matter of a shape and size, e.g., fine and coarse particulate, by merely changing the rotational direction of the barrel. For example, in one preferred form, e.g., abrading elements formed to abrade in one direction of rotation of the barrel may provide a relatively rough cut on the foodstuff, while those formed to abrade in the opposite direction of rotation may provide a finer cut, thus giving the user options heretofore unavailable in similar utensils.

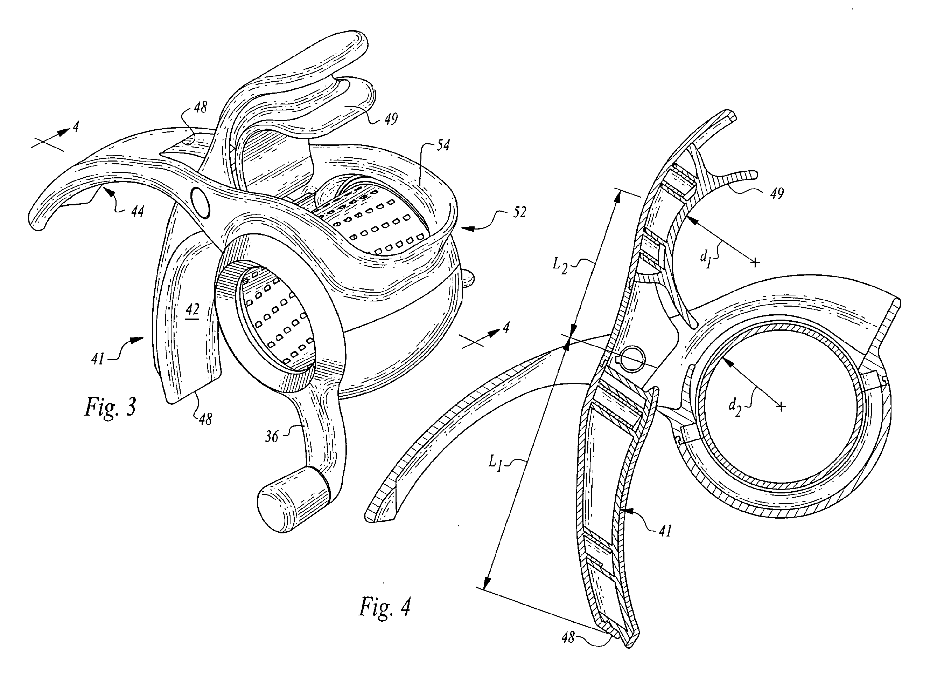

The handle 14 includes an elongated lever 41 which is ergonomically formed with a rear extension 42 adapted to be nested in a cavity 44, defined by and beneath the handle 14, as perhaps best seen in FIGS. 2 through 5, while the portion of the lever forward of the pin, i.e., the forward extension 47 resides above the handle, having extended through a slot 48 in the handle 14. The lever is rotatably secured to the housing by a transverse pin 43 passing through the lever at a point between the rear extension 42 and a forward extension 47. The pin 43 itself is so positioned as to facilitate a mechanical advantage to the user by multiplying the digital pressure created on the lever, and applying it to the hemispherical cap 49 and, thus, to the foodstuff being grated. In accomplishing this feature, the remote tip of the rear extension 42 of the lever 41 is at a distance L₁ from the pin 43. The distance from the pin 42 to the center of the hemispherical cap 49 at the forward end of the lever is at a distance L₂, with the hemispherical cap in registry with the open chamber 16. Because L₁ is greater than L₂, a mechanical advantage is created, permitting the user to apply the greater pressure at the cap 49 than is being exerted digitally on the rear extension 42. The remote end 52 of the housing 12 defines a hopper 54, which opens at its base to the open chamber 16. The hopper is sized to receive the cap 49 as it moves toward and away therefrom.

The hemispherical cap 49 has in internal diameter d₁, that is substantially the same as the outside diameter d₂ of the barrel 21 and is aligned such that when the lever is pressed into the handle of the cap, the cap, absent foodstuffs, will engage the surface of the grater barrel.

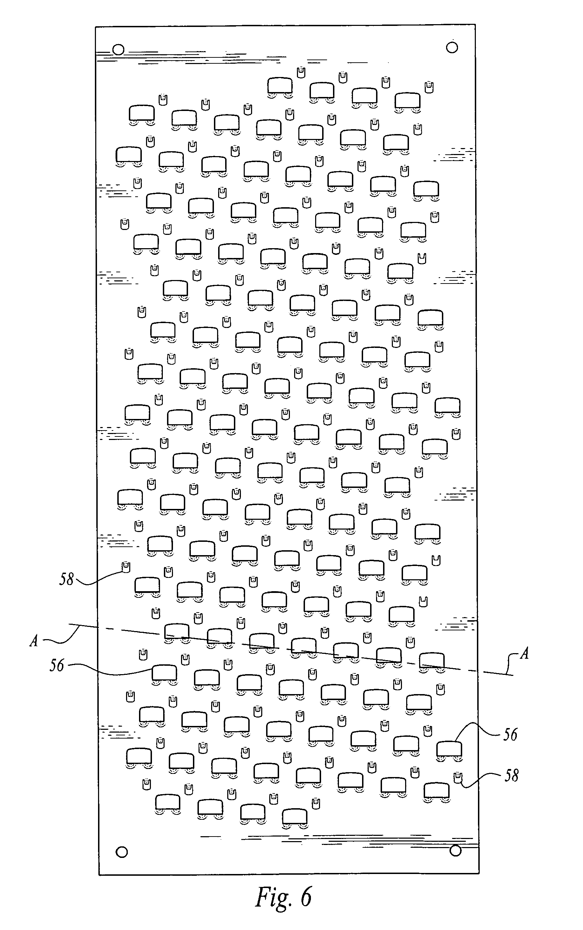

A special feature of the grater of the present invention is illustrated in some detail in FIG. 6. As may be clearly seen in FIG. 6, the plate 24 is formed with an array of teeth 56 and, in the illustrated case, re-aligned in rows which are disposed at an angle relative to the axis of rotation of the grater barrel, along line A-A.

In further keeping with the objectives of the invention, a second array of teeth 58 is shown as interposed between adjacent teeth 56 and are formed to cut in the direction of rotation of the grater barrel and opposite that of the teeth 56. By providing the pattern of teeth, it is possible to provide both coarse and fine grating on the same plate 24.

Giving consideration now to the grater 10 in operation, a foodstuff [not shown] to be grated is placed in the hopper 54, where it is engaged with the abrading surface of the grater barrel 21. The user then squeezes the handle 14, simultaneously pressing the rear extension of the lever 41 toward the handle. In so doing, the cap 49 engages the foodstuff, pressing it against the grater barrel 21 as it is manually rotated by means of the crank 36. The foodstuff is grated and the particulate matter thus created is discharged through the openings in the end cap 25 and the crank ring 34.

By virtue of the placement of the pin 43, establishing the orientation of the rear and forward extensions 42 and 47, respectively, of the lever 41 relative to the handle 14, several advantages are created. First, a mechanical advantage is created which permits the user to squeeze the lever toward the handle in which it is nested, which results in an increase in the applied pressure that the cap 49 can exert on the foodstuff inserted between the cap and the grater barrel. Accordingly, for those who have lesser hand strength, it will take less hand pressure to create needed force on the foodstuff, and the corollary is that more pressure can be exerted on the foodstuff as needed under more difficult circumstances. In either case, the fatigue to be experienced by the operator is lessened.

Additionally, while the user would necessarily use thumb pressure on prior art graters where the lever is rotated about and in at the end of the handle, the construction of the present invention enables the usage of the relatively stronger fingers in unison to create the necessary pressure on a foodstuff.

Having now described a preferred embodiment in substantial detail, it will be contemplated that those skilled in the art will be able to envision minor differences in the described structure. It will be understood that such variations are within the scope of the invention as defined by the accompanying claims, wherein:

## Claims

1. A hand held rotary grater, said rotary grater having a housing, said housing including an open chamber, said open chamber housing a grater barrel for rotation therein and a crank connected to said grater barrel for rotation thereof, said grater barrel having abrading elements thereon;
a lever, said lever having a forward extension, and a rearward extension, said lever being mounted between said forward extension and said rearward extension to said handle for limited rotation of said forward extension towards and away from said grater barrel, said forward extension of said lever being operable to press a foodstuff in said hopper against said grater barrel for the grating thereof when force is applied to said rearward extension, said lever being so mounted relative to said rigid handle as to multiply the forces applied to said lever at said forward extension.

2. The hand held rotary grater of Claim 1, wherein a pin is provided, said pin securing said lever to said handle for limited rotation of said lever.

3. The hand held rotary grater of Claim 1, wherein said rear extension being nestable in said handle.

4. The hand held rotary grater of Claim 1, wherein the length of said rear extension is L₁, the length of said forward extension is L₂, and L₁ is greater than L₂.

5. The hand held rotary grater of Claim 1, wherein a slot is formed in said handle, said slot extending forwardly from said pin and said forward extension passing through said slot to a position above said handle.

6. The hand held rotary grater of Claim 1, wherein said grater barrel is formed with abrading elements, said elements so positioned to abrade irrespective of the direction of rotation of said grater barrel.

7. The hand held rotary grater of Claim 1, wherein the abrading elements on said grater barrel being of variable sizes and configurations to thereby vary the size and shape of the particular matter created by rotation of said grater barrel.

8. The hand held rotary grater of Claim 7, wherein said abrading elements operable to abrade a food stuff in one direction of the grater barrel are of a different size and configurations than the said abrading elements operable in the opposite direction of rotation of the grater barrel, such that rotation of said grater barrel in one direction results in particulate of a different size and configuration than particulate created by rotation of said grater barrel in the opposite direction.

9. A hand held rotary grater, said rotary grater having a housing, said housing including an open chamber and a rigid handle connected thereto, said open chamber housing a grater barrel for rotation therein and a crank for manually rotating said grater barrel, said grater barrel formed with abrading elements thereon.;
said housing further including a hopper in direct communication with said open chamber;
and a lever operable to press a foodstuff in said hopper against said grater barrel, said lever having a forward extension, a cap at the free end of said forward extension of said lever, and a rear extension remote therefrom, said lever being rotatable about a pin disposed in said housing, said lever being engaged with said handle by said pin, said pin being so positioned between said rear extension and said cap so as to create a mechanical advantage at said cap when pressure is applied to said rear extension;
said cap being engageable with the foodstuff in said hopper when said lever is manually pressed toward said handle end, to thereby abrade food stuffs in said hopper being pressed against said grater barrel, the particulate created thereby being discharged at either end of said grater barrel.

10. The hand held rotary grater of Claim 9, wherein said pin being disposed transversely in said handle, and said lever being mounted on said pin such that said rearward extension of said lever being disposed below said handle, and said forward extension of said lever being above said handle.

11. The hand held rotary grater of Claim 9, wherein said rear extension being nestable in said handle.

12. The hand held rotary grater of Claim 9, wherein the abrading elements on said grater barrel being of variable sizes and shapes to thereby vary the size and shape of the particulate matter created by rotation of said grater barrel.

13. The hand held rotary grater of Claim 12, wherein said abrading elements operable to abrade a food stuff in one direction of the grater barrel are of a different size and shape than the said abrading elements operable in the opposite direction of rotation of the grater barrel, such that rotation of said grater barrel in one direction results in particulate of a different size and shape than particulate created by rotation of said grater barrel in the opposite direction.

14. The hand held rotary grater of Claim 9, wherein the length of said rear extension is L₁, the length of said forward extension is L₂, and L₁ is greater than L₂.

15. The hand held rotary grater of Claim 14, wherein a slot is formed in said handle, said slot extending forwardly from said pin and said forward extension passing through said slot to a position above said handle.

16. A hand held rotary grater, said rotary grater having a housing, said housing including an open chamber, said open chamber housing a barrel for rotation therein and a crank connected to said grater barrel for rotation thereof, said grater barrel having abrading elements thereon, wherein the abrading elements on said grater barrel being of variable sizes and configurations to thereby vary the size and shape of the particulate matter upon rotation of said barrel.

17. A hand held rotary grater, said rotary grater having a housing, said housing including an open chamber, said open chamber housing a barrel for rotation therein and a crank connected to said grater barrel for rotation thereof, said grater barrel having abrading elements thereon, wherein said abrading elements are operable to abrade foodstuffs upon rotation of said barrel; rotation of said barrel in one direction of the grater barrel creates particulate of a different size and configuration than the particulate created by rotation of the said barrel in the opposite direction.
